(19) Europäisches Patentamt
European Patent Office
Office européen des brevets

(11) **EP 2 721 774 B1**

(12) **EUROPEAN PATENT SPECIFICATION**

(45) Date of publication and mention
of the grant of the patent:
**14.09.2016 Bulletin 2016/37**

(51) Int Cl.:
***H04L 12/863*** *(2013.01)*      ***H04L 12/851*** *(2013.01)*

(21) Application number: **12800247.4**

(22) Date of filing: **15.06.2012**

(86) International application number:
**PCT/US2012/042801**

(87) International publication number:
**WO 2012/174465 (20.12.2012 Gazette 2012/51)**

(54) **METHOD AND SYSTEM FOR COMMUNICATING DATA PACKETS**

VERFAHREN UND SYSTEM ZUR ÜBERMITTLUNG VON DATENPAKETEN

PROCÉDÉ ET SYSTÈME DE COMMUNICATION DE PAQUETS DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2011 US 201113163231**

(43) Date of publication of application:
**23.04.2014 Bulletin 2014/17**

(73) Proprietor: **Intel Corporation
Santa Clara, CA 95054 (US)**

(72) Inventor: **ZHU, Jing
Portland, OR 97229 (US)**

(74) Representative: **Hufton, David Alan
HGF Limited
Fountain Precinct
Balm Green
Sheffield S1 2JA (GB)**

(56) References cited:
**EP-A1- 2 262 306         KR-B1- 100 664 020
US-A1- 2005 195 821     US-A1- 2007 206 615
US-A1- 2008 192 632     US-B1- 6 314 087**

• **J.Y. LEE ET AL.: 'Performance analysis of an
input and output queueing packet switch with a
priority packet discarding scheme' IEE
PROCEEDINGS vol. 142, 1995, pages 67 - 74,
XP006003908**

**Description**

**BACKGROUND**

In digital communications, data may be transmitted between two or more devices in data packets. Data packets generated by many applications, such as internet applications, may vary in type and importance. For example, a single application may generate voice and video data packets for transmission between a source and destination, where one type of data packet is more essential than the other to receive. In particular, if a network congests and the receiving device buffer overflows, it may be desirable for the receiving device to discard those packets deemed to have low priority, for example, video packets. When such IP data packets are transmitted over a wireless network, such as a WiFi or WiMAX network, different types of data packets can potentially be treated differently by the receiving device if the priority information associated with each packet is known to the receiving device. However, in applications involving data communications using internet based protocols, the data is typically transmitted in data flows, which may include many different and potentially heterogeneous packets. A data "flow" is generally defined as an individual, uni-directional, data stream between two applications (sender and receiver), uniquely identified by a 5-tuple identifier (transport protocol, source address, source port number, destination address, and destination port number).

In one example of an internet application, a single flow in a Skype® communication may contain transmission of voice, video, and file data packets. Currently, no technology exists for a transmitter of such a flow to prioritize the different types of data packets within the flow. Accordingly, during an internet telephone call, in order to transmit priority data, such as voice data, a transmitter, such as a WiFi or WiMAX transmitter, may be required to store the entirety of every flow to carry on a conversation. Thus, a transmitter may be required to store and first process a large amount of lower priority data included in each data flow that have arrived early, and therefore delay the transmission of high priority packets that may arrive later, especially under conditions of network congestion. It is with respect to these and other considerations that the present improvements have been needed.

US 6,314,087 refers to a method by a hub for determining priority on a network by determining priority order depending on multimedia data characteristics and normal data characteristics.

US 2007/2066 is directed to dynamically controlling bandwidth by a proxy of one or more connections and in particular to identifying and prioritizing network traffic based on the latency sensitivity of data traffic.

EP 2 262 306 discloses scheduling traffic in a shared communication channel of a mobile communications network which detects small sized data bursts and prioritizes their transmission.

According to a first aspect of the invention, there is provided a method as claimed in claim 1.

According to a second aspect of the invention, there is provided an article comprising a computer-readable storage medium as claimed in claim 10.

According to a third aspect of the invention, there is provided a transmitting device of a wireless communications system as claimed in claim 11.

Further embodiments of the invention are included in the dependent claims.

**BRIEF DESCRIPTION OF THE DRAWINGS**

FIG. 1 illustrates one embodiment of a communications system
FIG. 2 illustrates one embodiment that illustrates communications between a sending device and receiving device.
FIG. 3 illustrates operation of an exemplary mapping function.
FIG. 4 illustrates operation of another exemplary mapping function.
FIG. 5 depicts aspects of data packet-size-based prioritization between a sending device and receiving device according to further embodiments.
FIG. 6 is a diagram of an exemplary system embodiment.

**DETAILED DESCRIPTION**

Various embodiments may be generally directed to communications systems designed to communicate data packets over various wired or wireless communications media. Some embodiments may employ wireless communications using different communications protocol for transmitting data, such as one or more protocols defined by the Internet Engineering Task Force (IETF), for example.

Various embodiments may comprise one or more elements. An element may comprise any structure arranged to perform certain operations. Although an embodiment may be described with a limited number of elements in a certain arrangement by way of example, the embodiment may include more or less elements in alternate arrangement as desired for a given implementation. It is worthy to note that any reference to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

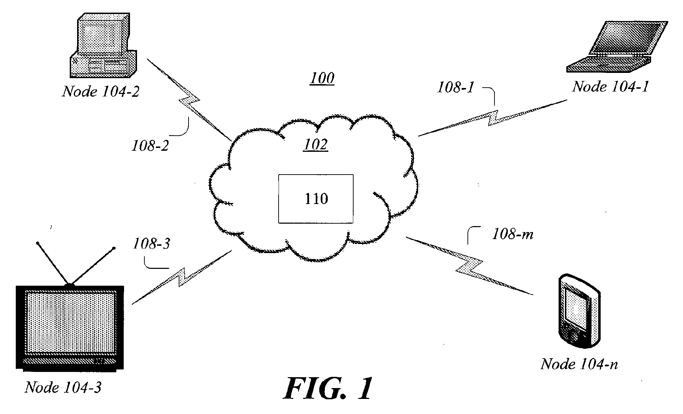

**FIG. 1** illustrates a block diagram of one embodiment of a communications system 100. As shown in FIG. 1, the communications system 100 may comprise a network 102 that communicates over links 108-*m* with a plurality of nodes 104-n, where *m* and *n* may represent any positive integer value. In various embodiments, the nodes 104-*n* may be implemented as various types of wireless devices. However, in some embodiments, any of nodes 104-n may be wired devices linked to network 102 over a wired link. Examples of wireless (or wired) devices may include, without limitation, a station, a subscriber station, a base station, a wireless access point (AP), a wireless client device, a wireless station (STA), a laptop computer, ultra-laptop computer, portable computer, personal computer (PC), notebook PC, handheld computer, personal digital assistant (PDA), cellular telephone, combination cellular telephone/PDA, smart phone, tablet computer, pager, messaging device, media player, digital music player, set-top box (STB), appliance, workstation, user terminal, mobile unit, consumer electronics, television, digital television, high-definition television, television receiver, high-definition television receiver, and so forth.

In some embodiments, a multiplicity of devices in communications system 100 may communicate with one another using a combination of wireless and internet communications protocols. In some embodiments, network 102 may be a portion of the internet. In some embodiments, any of the nodes 104-n may act as a sending or receiving device whose operation is described hereinbelow. In some embodiments, a device 110, which may be a router within network 102, may link one or more nodes 104-n and may also act as a sending device. Some embodiments of a communications system may be implemented with a radio technology such as Institute of Electrical and Electronics Engineers (IEEE) 802.16 (WiMAX), IEEE 802-20, evolved UTRA (E-UTRA), including revisions, progeny and variants. IEEE 802.16m is an evolution of IEEE 802.16e, and provides backward compatibility with an IEEE 802.16-based system. The UTRA is a part of a universal mobile telecommunication system (UMTS). 3rd generation partnership project (3GPP) long term evolution (LTE) is a part of an evolved UMTS (E-UMTS) using the E-UTRA. LTE-advance (LTE-A) is an evolution of the 3GPP LTE. It may be appreciated that other radio technologies may be employed in communications system 100 as well, and the embodiments are not limited to these examples.

In various embodiments, techniques for transmitting and/or receiving data packets may involve transmitting data in a data flow. A "data flow" as used hereinafter, refers to a uni-directional stream of data between two applications (e.g., a sending device and a receiving device), that includes one or more data packets and may be uniquely identified by a flow identifier, such as a 5-tuple identifier (transport protocol, source address, source port number, destination address, and destination port number), for example. The term "sending device" refers to a device that is arranged to send a data flow over a data network (e.g., internet) and/or over a wireless communications link. The term "receiving device" refers to a device that is arranged to receive a data flow over a data network (e.g., internet) and/or over a wireless communications link. Thus, in various embodiments, the sending device includes at least a wireless transmitter or radio, and the receiving device includes at least a wireless receiver or radio, although both devices may optionally include both transmitters/receivers (transceivers) or radios. The embodiments are not limited in this context.

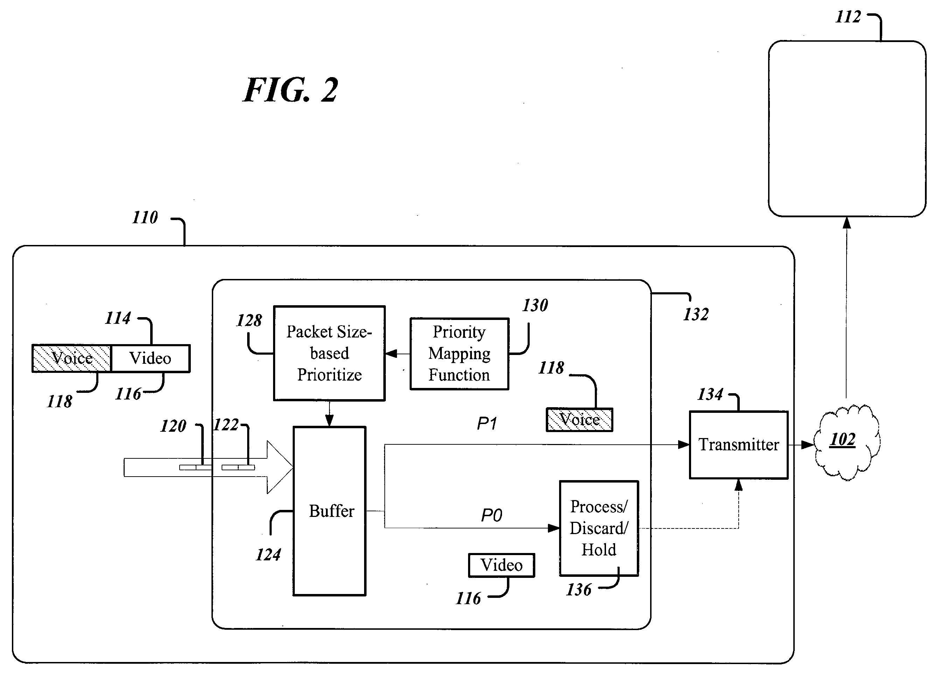

**FIG. 2** illustrates one embodiment that illustrates communications between a sending device 110 and receiving device 112, which may be linked through network 102. Either sending device 110 and/or receiving device 112 may be arranged to communicate using wireless communications as discussed above. Additionally, sending device 110 is arranged to send data to receiving device 112 using an IETF protocol, such as (transport control protocol/internet protocol (TCP/IP) and/or user datagram protocol/internet protocol (UDP/IP, also simply referred to hereinafter as "UDP"). Sending device 110 and receiving device 112 may communicate with one another via data streams 114, which may include voice data packets 118 and video data packets 116. For example, sending device 110 may link to receiving device 112 in a telephone (VOIP) call in which voice data packets 118 are periodically sent between sending device 110 and receiving device 112. In the embodiment illustrated in FIG. 2, in addition to voice data packets 118, sending device 110 may be arranged to transmit video data packets 116 to receiving device 112. It may be appreciated that devices 110, 112 may communicate other types of data packets as well, and the embodiments are not limited in this context.

In some embodiments, sending device 112 may include a packet treatment device 132, which may comprise one or more integrated circuit chips that together provide the functions described herein. For example, the packet treatment device 132 may include one or more processors and a memory (not shown). Sending device includes a transmitter 134, which may include a wireless transceiver (not shown) to send data packets wirelessly, and in some embodiments may include the packet treatment device 132. If receiving device 112 includes a display (not shown), the display may show streaming video content based on video data packets 116. Thus, the receiving device 112 may simultaneously provide to a user streaming voice and video sent from sending device 110.

In particular, voice data packets 118 and video data packets 116 may be sent in a series of data flows over network 102. FIG. 2 illustrates the packaging of two such data flows 120, 122 that may be transmitted from sending device 110, although any number of data flows may be used by the devices 110, 112. As depicted in FIG. 2, sending device 110 may place the data flows 120, 122 into a queue to be stored in a buffer 124 in sending device 110. Data from buffer 124 may be forwarded to a transmitter 134, for sending to receiving device 112. For example, under some operating conditions, voice and video data packets in data flows, such as data flows 120, 122, may be transmitted from buffer 124 to transmitter 134 in different fashion according to respective priorities P1 and P0. In embodiments in which data packets 116, 118 are UDP data packets, under certain conditions, the data packets 116, 118 may be transmitted to receiving device 112 to be played in a streaming fashion to enable real time voice and video communications between sending device 110 and receiving device 112. Under other conditions, the voice data packets 118 may be preferentially transmitted, as described further hereinbelow.

In various embodiments, the priority of data packets to be forwarded from buffer 124 to transmitter 134 is controlled by a packet size based prioritization device 128, which is arranged so that data packets within an individual data flow may be prioritized. For example, device buffer 124 may overflow under various situations, such as when data traffic congestion occurs in a network. Under overflow conditions, packets within data flows that are sent to buffer 124 may be classified according to data packet type so that those data packets deemed to have higher priority may be forwarded to transmitter 134, while those deemed to have lower priority may be discarded or held back in a queue. In this manner, resources within sending device 110 may be preserved for the higher priority packets. In the embodiment shown in FIG. 2, a priority mapping function 130 may be supplied to packet size based prioritization device 128 in order for data packets within a data flow to be prioritized. As detailed below, in some embodiments, the priority mapping function 130 may be pre-stored in the sending device 110. The priority mapping function 130 may specify a priority of a data packet based on several factors, such as upon the size or size range of a data packet, for example.

In various embodiments the size of data packets of a first type, such as voice data packets 118, may be set at specific values or ranges of values that correspond to a given priority indicated by the priority mapping function 130. In one example, the priority mapping function 130 may establish a highest priority for data packets of a set of size ranges. Sending device 110 may supply data packets to receive highest priority with the appropriate size corresponding to the highest priority set by priority mapping function 130. Thus, when highest priority data packets are received at buffer 124, those data packets may be recognized to have the highest priority and may be forwarded for processing. Other data packets that do not have the proper size for highest priority may be discarded or delayed.

In the above manner, the buffer 124 in sending device 110 may recognize and prioritize those data packets within a data flow that have the highest priority according to the size of the data packets. In one example, in a VOIP telephone call, the voice data may be deemed to be of highest priority and may be arranged in packets whose size(s) correspond to the highest priority according to priority mapping function 130. Video data packets 116, which may be deemed to have lower priority than voice data packets 118, may be arranged in data packets whose size(s) correspond to lower priority according to priority mapping function 130. In this manner, the integrity of voice transmissions during a VOIP telephone call may be preserved by packet size based prioritization device 128, which may control buffer 124 to selectively discard or hold video data packets 116 as necessary.

In some embodiments, when the stored data in buffer 124 is below a threshold, data packets deemed to have a highest priority (P1) may be placed in the front of a queue for forwarding to transmitter 134, while data packets having a lower priority (P0) are placed in back of the queue for forwarding only after highest priority data packets are sent from buffer 124. Thus, in one example, video data packets 116 may be placed in process/discard/hold queue 136 and forwarded to transmitter 134 only after all voice data packets are sent to transmitter 134. When the stored data exceeds a threshold in buffer 124, for example, under congestion conditions, the P0 data may be discarded from the buffer 124 to prevent data overflow. Under conditions in which there is no data congestion, on the other hand, .the video data packets may be forwarded to transmitter 134 in a timely fashion so that both video and voice data packets may be transmitted to receiving device 112 to be played in a streaming fashion.

As noted, in various embodiments a packet-size-to-priority (PSTP) mapping function may be stored in sending device 110, such as in a transmitter 134, or in another convenient location in sending device 110. The PSTP may be defined according to any convenient arrangement. For example, it may be desirable to assign a higher priority to data packets whose size range corresponds to that typically found in voice data packets communicated in a data flow. In one example, a PSTP mapping function, *f* may be defined as follows: The priority pi of a data packet i may be defined as a function of the size si' of the data packet i, such that f(si') = pi. In some embodiments, the data packet priority may comprise two levels, P-1 (or 1), which denotes a highest priority, and P-0 (or 0), which denotes a lowest priority. In some embodiments in which data packets are grouped into two data packet priority levels, the data packet priority may be determined according to the following:

$$f(s_i') = 1 \text{ if } (_{min} \leq s_i' \leq S_{max}); \text{ and}$$

$$f(s_i') = 0 \text{ if } (s_i' > S_{max} \text{ or } s_i' < S_{min}); \qquad (1)$$

where $S_{max}$ represents a predetermined maximum packet size and $S_{min}$ represents *a* predetermined minimum packet size. In one example, $S_{min}$ may *be* set to 0, in which case all data packets below a size $S_{max}$ may be assigned a priority 1 and all those whose size lies above $S_{max}$ are assigned a priority 0. This PSTP mapping function may provide a useful method for prioritizing data packets in cases where different types of data packets tend to fall into different size ranges.

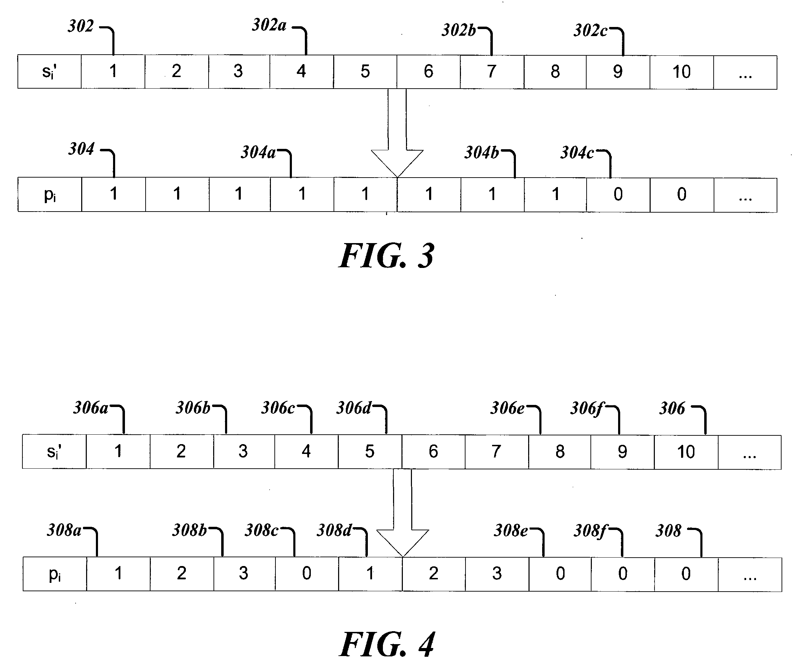

**FIG. 3** provides an illustration of operation of this PSTP mapping function according to an embodiment in which $S_{max}$ =8. In the example shown, data packets 302 may vary in size between 1 and 10 or greater, which size numbers may correspond to a convenient size. For example, a size "1" may correspond to 1 byte, "2" may correspond to 2 bytes, and so forth. The data packets may be processed by a device such as packet size based prioritization device 128, which applies the PSTP mapping function defined by Eq. (1) above to assign a priority to each data packet. For data packets 302a having a size "4," the corresponding priority 304a is P-1. Similarly data packets 302b having a size "7" also receive a priority 304b that is P-1. However, data packets 302c having a size "9" receive a priority of zero.

In other embodiments in which data packets are grouped into multiple data packet priority levels, data packets may be assigned a priority among a number of priority levels according to a remainder of a modulo operation. In various embodiments, the modulo operation may take the form of mod (si', P), where P represents the number of priority levels, and the modulo operation produces a remainder after the division of data packet size by the number of priority levels. Thus, for example, if the packet size = 7 and the number of priority levels is 3, mod (si', P) function results in mod (7, 3) =1. Thus, a data packet of size 7 in a three priority level system receives a P-1 priority.

In one embodiment of assigning multiple priority levels, the data packet priority may be determined according to the following:

$$f(s_i') = mod(s_i'+x, P) \text{ if } (S_{min} \leq s_i' \leq S_{max}); \text{ and}$$

$$f(s_i') = 0 \quad if(s_i'>S_{max} \text{ or } s_i'<S_{min} \qquad (2)$$

where P represents the number of priority levels and x the initial offset, i.e., $0 \leq x \leq$ P-1.

**FIG. 4** provides an illustration of operation of this PSTP mapping function according to an embodiment in which P=4, x=O, Smin=0, and S max=8. Packets 306 that are received and processed according to the PSTP mapping function may have a size sr' that ranges from 1 to 10 or greater, as illustrated. Packet 306a having a size "I" receives a priority 308a corresponding to a highest priority level P-1 ("1"), while packet 306b having a size "3" receives a priority 308b corresponding to a priority level "3." Packet 306c having a size "4" receives a priority 308c corresponding to a lowest priority level "0." Packet 306d having a size "5" receives a priority 308d that also corresponds to the highest priority level P-1. Packet 306e having a size "8" receives a priority 308e corresponding to a lowest priority level "0." Packet 306fhaving a size "9," which is above Smax,also receives a priority 308f corresponding to a lowest priority level "0."

In addition to allowing for multiple priority levels to be assigned to different data packets, this latter PSTP mapping function may be useful to facilitate grouping of data packets of a desired data type into a high priority group in cases where the size of the desired data packets may vary substantially. For example, voice data packets in a VOIP telephone call may vary in size over a substantial range such that some video data packets to be assigned a lower priority may have a size range intermediate between the initial size of smaller and larger voice data packets. In order to ensure that the data packets deemed most important in a data flow, such as voice data packets, are accorded the highest priority by the sending device, the size of the important data packets may be adjusted from an initial size. In this manner, since the initial size of a voice data packet may vary, the size of voice data packets may be arranged (adjusted) to correspond to a highest priority size range given by a PSTP mapping function to be used to prioritize received data packets. This may be accomplished using a packet generating control function that may be employed by a sending device, as detailed below.

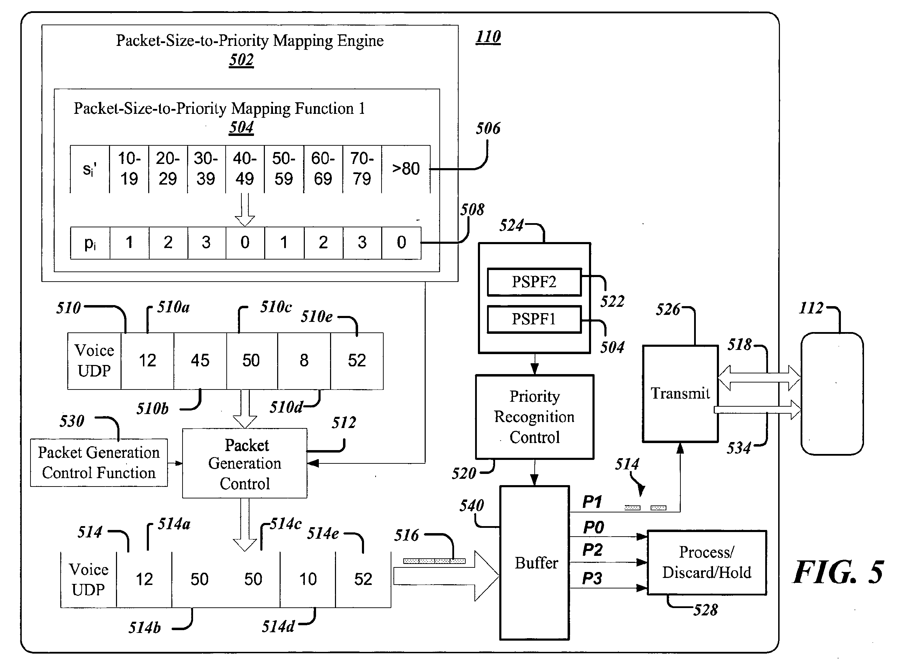

**FIG. 5** depicts aspects of data packet-size-based prioritization that may be employed by a sending device 110before transmission of data to receiving device 112 according to further embodiments. Sending device 110 includes a packet-size-to-priority mapping engine 502, which may apply one or more different PSTP mapping functions to a packet generation control (PGC) device 512. In some cases, the engine 502 may be part of PGC device 512. In various embodiments PGC device 512 may manipulate the size of data packets according to a desired prioritization scheme. For example the size of user datagram protocol (UDP) data packets that are communicated between sending device 110 and receiving device 112 may be controlled to facilitate prioritization of the data packets by the receiving device.

In one example illustrated in FIG. 5, during a communication session PGC device 512 may receive multiple UDP voice data packets 510 for transmission to receiving device 112, which are treated according to a first packet-size-to-priority mapping function (PSPF) 504. In some embodiments, the size of voice data packets 510 may be adjusted according to PSPF 504 and a packet generating control function (PGCF) 530. The PGCF 530 may determine, for example, the amount of adjustment in the size of a given data packet, based upon the initial data packet size, the type of data packet, and the given PSPF to be applied. In FIG. 5, the PSPF 504 is illustrated in tabular form and provides a priority pi for data packets as a function of their size si, which may represent an adjusted data packet size. When PGC device 112 receives the voice data packets 510 it recognizes that the voice data packets are to be classified as P-1. The PGC device 512 then may determine the initial size of each data packet of the voice data packets 510. Based upon the PSPF 504, the PGC device 512 then may apply PGCF 530 to adjust the size of each voice data packet as necessary so that the adjusted size of each voice data packet falls within a size bin (range) that corresponds to a P-1 priority.

In one embodiment, PCGF 530 may specify that the minimum amount of bits are to be added to ensure that a received data packet falls within a desired size range according to type of data packet and PSPF being applied. However, other functions are possible according to additional embodiments. For example, data packet 510a, having a size of "12" falls within a "10-19" size bin, which is accorded a P-1 priority according to PSPF 504. Accordingly, PGC device 512 may output a data packet 514a that reflects no adjustment to the size of initial voice data packet 510a. Data packet 510b has an initial size of "45," which is accorded a lowest priority of "0" according to PSPF 504. Accordingly, PGC device 512 may recognize that the size of voice data packet 510b should be adjusted so that it may be accorded the same P-1 priority as for voice data packet 510a. In order to accomplish this, the PGC device 512 may increase the size of the voice data packet 510b by "5" so that an adjusted voice data packet 514b having a size of "50" is output, reflecting a data "payload" size of 45 and a "balance" size of 5. This may be accomplished by adding empty bits of size "5" to the initial voice data packet 510b. The adjusted size of "50" falls in a size bin corresponding to a priority P-1, so that when the voice data packet 514b is received by a receiving device, it may be recognized as having high priority.

Data packet 510c has an initial size of "50," so that a data packet 514c may be output without adjustment in size and still recognized as having a P-1 priority as defined by PSPF 504. Data packet 410d has an initial size of "8," which is accorded a lowest priority of "0" according to PSPF 504. Accordingly, PGC device 512 may recognize that the size of voice data packet 510d should be adjusted so that it may be accorded the same P-1 priority as for other voice data packets. In order to accomplish this, the PGC device 512 may increase the size of the voice data packet 510d by "2" so that an adjusted voice data packet 514d having a size of "10" is output. The adjusted size of "10" falls in a "10-19" size bin corresponding to a P-1 priority, so that when the voice data packet 514d is received by a receiving device, it may be recognized as having high priority. Finally, data packet 510e has an initial size of "52," so that a data packet 514e may be output without adjustment in size and still recognized as having a P-1 priority as defined by PSPF 504.

In the above manner, the size of voice data packets to be accorded a desired priority can be adjusted with minimal overhead. Thus, only data packets whose initial size does not fall into a range corresponding to P-1 have any bits added, and in some embodiments, the total added bits may correspond to the minimum size necessary to place the adjusted size of the data packet in question within the desired priority range. Moreover, by establishing P-1 bins at separated size ranges that may reflect typical variations in initial data packet sizes, the PSPF 504 may ensure that any data packet to be accorded high priority has a size that is within or close to a high priority size range, thereby minimizing the amount of empty bits added by PGC device 512 while still ensuring that all the desired data packets receive the appropriate priority treatment.

The adjusted voice data packets 514 may then be sent to buffer 540 in a data flow 516, which may include additional data packets. A priority recognition control device (PRC) 520 may control buffer 540 to process data packets in the data flow 516 into different priority levels. In various embodiments, the PRC 520 acts as a packet size based prioritization device. The packet size based prioritization may be based upon the same PSPF 504 used to produce the adjusted voice data packets 514. In some embodiments, the PSPF 504 may be chosen in a one- or two-way message 518 between sending device 110 and receiving device 112, which message may be used to negotiate the proper priority mapping function. In some embodiments, the PSPF 504 and optional additional functions (see a second PSPF2 522) may be stored locally (as PSPF1) in a memory 524 of sending device 110. In this case, sending device 110 and receiving device 112 may negotiate which PSPF among multiple PSPFs is to be used by PRC device 520. Alternatively, the specific PSPF to be used may simply be chosen by sending device 110.

As illustrated, PRC device 520 may then control buffer 540 to sort received data packets into priority levels P1, P0, P2, and P3 based upon the size of the data packets and the PSPF to be employed. In the example illustrated in FIG. 4, the data packets having sizes corresponding to priority levels P0, P2, and P3 may be forwarded for process/discard/hold queue 528, which may result in their deletion under certain conditions, such as buffer overflow (not shown), as discussed with respect to FIG. 2. Data packets having sizes corresponding to P-1 priority, on the other hand, are forwarded to transmitter 526 for transmitting in communication 534 to receiving device 112.

In other embodiments of three or more priority levels, data packets corresponding to three or more different data types may be each assigned to a respective priority level. Thus, voice data may receive P-1, video data may receive P2, a third type of data P3, and so forth. The treatment of data packets in data flows having three or more data types may be based upon the present conditions as determined by a receiver. Thus, under normal traffic condition, all priority levels may be forwarded for processing, while under a "slow" traffic condition, only data packets for data types having a P-1 or P-2 level are forwarded for transmission, while other data packets are placed in the back of a queue; while under "congested" conditions, all data packets except a data type assigned to P-1 are discarded.

Although the embodiments detailed above generally disclose data packet based prioritization from the point of view of a sending device that may originate a data communication, in other embodiments the sending device may be a router or other device that stands at an intermediate point between a device originating the data flow and an ultimate receiving device (see device 110 in FIG. 1). In addition, the communication methods and architecture disclosed herein may be used in systems in which data flows are communicated to multiple receiving devices from a single sending device.

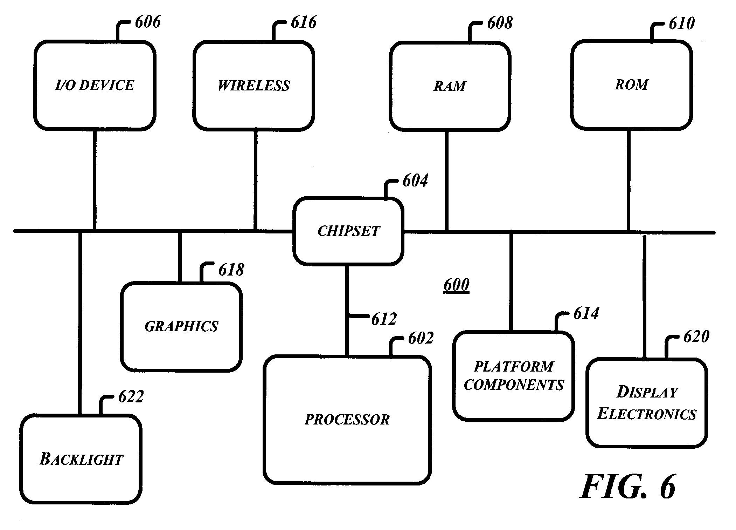

**FIG. 6** is a diagram of an exemplary system embodiment. In particular, FIG. 6 is a diagram showing a platform 600, which may include various elements. For instance, FIG. 6 shows that platform (system) 600 may include a processor 602, a chipset 604, an input/output (I/O) device 606, a random access memory (RAM) (such as dynamic RAM (DRAM)) 608, and a read only memory (ROM) 610, display electronics 620, display backlight 622, and various other platform components 614 (e.g., a fan, a crossflow blower, a heat sink, DTM system, cooling system, housing, vents, and so forth). System 600 may also include wireless communications chip 616 and graphics device 618. The embodiments, however, are not limited to these elements.

As shown in FIG. 6, I/O device 606, RAM 608, and ROM 610 are coupled to processor 602 by way of chipset 604. Chipset 604 may be coupled to processor 602 by a bus 612. Accordingly, bus 612 may include multiple lines.

Processor 602 may be a central processing unit comprising one or more processor cores and may include any number of processors having any number of processor cores. The processor 602 may include any type of processing unit, such as, for example, CPU, multi-processing unit, a reduced instruction set computer (RISC), a processor that have a pipeline, a complex instruction set computer (CISC), digital signal processor (DSP), and so forth.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Some embodiments may be implemented, for example, using a computer-readable medium or article which may store an instruction or a set of instructions that, if executed by a computer, may cause the computer to perform a method and/or operations in accordance with the embodiments. Such a computer may include, for example, any suitable processing platform, computing platform, computing device, processing device, computing system, processing system, computer, processor, or the like, and may be implemented using any suitable combination of hardware and/or software. The computer-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method, comprising:

   receiving in a buffer (124) of a first device (110) a multiplicity of data packets (116, 118) in a data flow (120, 122) comprising data packets (118) of a first type and data packets (116) of a second type:

   adjusting a size of at least one data packet in the data flow based upon an initial data packet size, a type of data packet and a given priority function to be applied, wherein a size of data packets of the first type are set at a specific size value or a range of size values; and
   assigning a priority to data packets of the multiplicity of data packets according to the priority function (130), the priority function based upon the size of a data packet.

2. The method of claim 1, comprising receiving control signals from a priority recognition control device (520) arranged to assign priority to the multiplicity of data packets according to the priority function.

3. The method of claim 1 or 2, wherein the data packets are received into the buffer (124) on a per-flow basis, wherein one or more data flows (120, 122) includes data packets (118) of the first type and data packets (116) of the second type.

4. A method according to any one of claims 1 to 3, comprising:

   assigning a higher priority to the data packets (118) of the first type, and
   discarding the data packets (116) of the second type from the transmitting device.

5. A method according to any one of claims 1 to 4, comprising assigning a highest priority to data packets (118) having a size between a maximum and minimum set by the priority function.

6. A method according to any one of claims 1 to 5, comprising:

   assigning a first priority to data packets (118) having a first size between a predefined maximum and minimum set by the priority function; and
   assigning a second priority different from the first priority to data packets (116) having a second size that is not between the predefined maximum and minimum.

7. A method according to any one of claims 1 to 5, comprising assigning to a data packet a priority among a number of priority levels according to a remainder after modulo operation, wherein the priority corresponds to a remainder after division of data packet size by the number of priority levels.

8. A method according to any one of claims 1 to 7, comprising adding a balance portion to a payload portion of data packets of the first type, wherein a size of the balance portion is arranged to provide a total data packet size corresponding to a priority assigned to the data packets of the first type.

9. A method according to any one of claims 1 to 8, comprising:

   receiving in the buffer additional data packets comprising one or more additional types of data packets; and
   assigning priority to the additional data packets based upon the priority function.

10. An article comprising a computer-readable storage medium containing instructions that when executed by a processor enable a system to perform a method according to any one of claims 1 to 9.

11. A transmitting device (110) of a wireless communications system, comprising:

    a transmitter (134) having a memory communicatively coupled to a processor (128),

    **characterized in that**:

    the memory stores one or more priority functions (130) arranged for treating data packets (116, 118) received in a data flow (121, 122) by a buffer (124) in the transmitting device, the data flow comprises data packets (118) of a first type and data packets (116) of a second type, the priority function based upon a packet size of a data packet, and the processor arranged to determine a packet size for each received data packet, adjust a size of at least one data packet in the data flow based upon an initial data packet size, a type of data packet and a given priority function to be applied, wherein a size of data packets of the first type are set at a specific size value or a range of size values and to assign a priority to each received data packet based upon the packet size and the priority function.

12. The transmitting device of claim 11, the buffer (124) arranged to store received data packets and forward each stored received data packet according to the priority.

13. The transmitting device of claim 11 or 12, wherein the buffer is arranged to receive the data packets on a per-flow basis, wherein one or more data flows (120, 122) includes a data packet (116) of a first type and a data packet (118) of a second type.

14. The transmitting device of claim 13, wherein the transmitting device is arranged to communicate to a receiving device (112) data packets in the one or more data flows and a message designating a packet-size-to-priority, PSTP, mapping function to be used by the transmitting device for treating received data packets in the one or more data flows.

15. The transmitting device of any one of claims 11 to 14, the processor arranged to:

send data packets (118) having a first priority for processing; and
discard data packets (116) having a second priority lower than the first priority.

**Patentansprüche**

1. Verfahren, umfassend:

Empfangen einer Vielzahl von Datenpaketen (116, 118) in einem Datenfluss (120, 122), der Datenpakete (118) eines ersten Typs und Datenpakete (116) eines zweiten Typs umfasst, in einem Puffer (124) einer ersten Vorrichtung (110);
Anpassen einer Größe mindestens eines Datenpakets im Datenfluss basierend auf einer anfänglichen Datenpaketgröße, einem Typ von Datenpaket und einer bestimmten Prioritätsfunktion, die angewendet werden soll, wobei eine Größe von Datenpaketen des ersten Typs auf einen spezifischen Größenwert oder einen Bereich von Größenwerten gesetzt wird; und
Zuweisen einer Priorität zu Daten der Vielzahl von Datenpaketen gemäß der Prioritätsfunktion (130), wobei die Prioritätsfunktion auf der Größe eines Datenpakets basiert.

2. Verfahren nach Anspruch 1, umfassend ein Empfangen von Steuersignalen von einer Prioritätserkennungssteuervorrichtung (520), die so ausgelegt ist, dass sie der Vielzahl von Datenpaketen Priorität gemäß der Prioritätsfunktion zuweist.

3. Verfahren nach Anspruch 1 oder 2, wobei die Datenpakete auf einer Pro-Fluss-Basis im Puffer (124) empfangen werden, wobei ein oder mehrere Datenflüsse (120, 122) Datenpakete (118) des ersten Typs und Datenpakete (116) des zweiten Typs umfassen.

4. Verfahren nach einem der Ansprüche 1 bis 3, umfassend:

Zuweisen einer höheren Priorität zu den Datenpaketen (118) des ersten Typs, und
Verwerfen der Datenpakete (116) des zweiten Typs von der Sendevorrichtung.

5. Verfahren nach einem der Ansprüche 1 bis 4, umfassend ein Zuweisen einer höchsten Priorität zu Datenpaketen (118) mit einer Größe zwischen einem Maximum und Minimum, die durch die Prioritätsfunktion festgelegt wird.

6. Verfahren nach einem der Ansprüche 1 bis 5, umfassend:

Zuweisen einer ersten Priorität zu Datenpaketen (118) mit einer ersten Größe zwischen einem vordefinierten Maximum und Minimum, die durch die Prioritätsfunktion festgelegt wird; und

Zuweisen einer zweiten, von der ersten Priorität verschiedenen Priorität zu Datenpaketen (116) mit einer zweiten Größe, die nicht zwischen dem vordefinierten Maximum und Minimum ist.

7. Verfahren nach einem der Ansprüche 1 bis 5, umfassend ein Zuweisen zu einem Datenpaket einer Priorität unter einer Anzahl von Prioritätsstufen gemäß einem Rest nach einer Modulo-Operation, wobei die Priorität einem Rest nach der Teilung der Datenpaketgröße durch die Anzahl von Prioritätsstufen entspricht.

8. Verfahren nach einem der Ansprüche 1 bis 7, umfassend ein Hinzufügen eines Ausgleichsteils zu einem Nutzlastteil von Datenpaketen des ersten Typs, wobei eine Größe des Ausgleichsteils so ausgelegt ist, dass sie eine Gesamtdatenpaketgröße bereitstellt, die einer Priorität entspricht, die den Datenpaketen des ersten Typs zugewiesen ist.

9. Verfahren nach einem der Ansprüche 1 bis 8, umfassend:

Empfangen von zusätzlichen Datenpaketen im Puffer, die einen oder mehrere zusätzliche Typen von Datenpaketen umfassen; und

Zuweisen von Priorität zu den zusätzlichen Datenpaketen basierend auf der Prioritätsfunktion.

10. Gegenstand, umfassend ein computerlesbares Speichermedium, das Anweisungen enthält, die bei Ausführung durch einen Prozessor ein System befähigen, ein Verfahren nach einem der Ansprüche 1 bis 9 durchzuführen.

11. Sendevorrichtung (110) in einem drahtlosen Kommunikationssystem, umfassend:

einen Sender (134) mit einem Speicher, der kommunikativ mit einem Prozessor (128) gekoppelt ist,

**dadurch gekennzeichnet, dass**:

der Speicher eine oder mehrere Prioritätsfunktionen (130) speichert, die zum Behandeln von Datenpaketen (116, 118) ausgelegt sind, die in einem Datenfluss (121, 122) durch einen Puffer (124) in der Sendevorrichtung empfangen werden, wobei der Datenfluss Datenpakete (118) eines ersten Typs und Datenpakete (116) eines zweiten Typs umfasst, die Prioritätsfunktion auf einer Paketgröße eines Datenpakets basiert, und der Prozessor so ausgelegt ist, dass er eine Paketgröße für jedes empfangene Datenpaket bestimmt, eine Größe mindestens eines Datenpakets im Datenfluss basierend auf einer anfänglichen Datenpaketgröße, einem Typ von Datenpaket und einer bestimmten Prioritätsfunktion, die angewendet werden soll, anpasst, wobei eine Größe von Datenpaketen des ersten Typs auf einen spezifischen Größenwert oder einen Bereich von Größenwerten gesetzt wird, und jedem empfangenen Datenpaket eine Priorität basierend auf der Paketgröße und der Prioritätsfunktion zuweist.

12. Sendevorrichtung nach Anspruch 11, wobei der Puffer (124) so ausgelegt ist, dass er empfangene Datenpakete speichert und jedes gespeicherte empfangene Datenpaket gemäß der Priorität weiterleitet.

13. Sendevorrichtung nach Anspruch 11 oder 12, wobei der Puffer so ausgelegt ist, dass er die Datenpakete auf einer Pro-Fluss-Basis empfängt, wobei ein oder mehrere Datenflüsse (120, 122) Datenpakete (116) des ersten Typs und Datenpakete (118) des zweiten Typs umfassen.

14. Sendevorrichtung nach Anspruch 13, wobei die Sendevorrichtung so ausgelegt ist, dass sie an eine Empfangsvorrichtung (112) Datenpakete in dem einen oder den mehreren Datenflüssen und eine Nachricht kommuniziert, die eine Paketgröße-zu-Priorität, PSTP-Zuordnungsfunktion festlegt, die von der Sendevorrichtung zum Behandeln von empfangenen Datenpaketen in dem einen oder den mehreren Datenflüssen verwendet werden soll.

15. Sendevorrichtung nach einem der Ansprüche 11 bis 14, wobei der Prozessor ferner ausgelegt ist zum:

Senden von Datenpaketen (118) mit einer ersten Priorität zur Verarbeitung; und

Verwerfen von Datenpaketen (116) mit einer zweiten Priorität, die niedriger als die erste Priorität ist.

**Revendications**

1. Procédé, comprenant les étapes consistant à :

recevoir dans un tampon (124) d'un premier dispositif (110) une multiplicité de paquets de données (116, 118) d'un flux de données (120, 122) comprenant des paquets de données (118) d'un premier type et des paquets de données (116) d'un deuxième type ;
régler une taille d'au moins un paquet de données du flux de données d'après une taille de paquet de données initiale, un type de paquet de données et une fonction de priorité donnée à appliquer, une taille des paquets de données du premier type étant fixée à une valeur de taille spécifique ou dans une plage de valeurs de taille ; et
attribuer une priorité aux paquets de données de la multiplicité de paquets de données conformément à la fonction de priorité (130), la fonction de priorité reposant sur la taille d'un paquet de données.

2. Procédé selon la revendication 1, comprenant l'étape consistant à recevoir des signaux de commande d'un dispositif de commande de reconnaissance de priorité (520) agencé pour attribuer une priorité à la multiplicité de paquets de données conformément à la fonction de priorité.

3. Procédé selon la revendication 1 ou 2, dans lequel les paquets de données sont reçus dans le tampon (124) en fonction du flux, et dans lequel un ou plusieurs flux de données (120, 122) comprennent des paquets de données (118) du premier type et des paquets de données (116) du deuxième type.

4. Procédé selon l'une des revendications 1 à 3, comprenant les étapes consistant à :

attribuer une priorité plus élevée aux paquets de données (118) du premier type, et
éliminer du dispositif d'émission les paquets de données (116) du deuxième type.

5. Procédé selon l'une des revendications 1 à 4, comprenant l'étape consistant à attribuer une priorité la plus élevée aux paquets de données (118) ayant une taille comprise entre un maximum et un minimum fixés par la fonction de priorité.

6. Procédé selon l'une des revendications 1 à 5, comprenant les étapes consistant à :

attribuer une première priorité aux paquets de données (118) ayant une première taille comprise entre un maximum et un minimum prédéfinis, fixés par la fonction de priorité ; et
attribuer une deuxième priorité, différente de la première priorité, aux paquets de données (116) ayant une deuxième taille qui n'est pas comprise entre le maximum et le minimum prédéfinis.

7. Procédé selon l'une des revendications 1 à 5, comprenant l'étape consistant à attribuer à un paquet de données une priorité faisant partie d'un ensemble de niveaux de priorité en fonction d'un reste obtenu après une opération modulo, la priorité correspondant à un reste après division d'une taille d'un paquet de données par le nombre de niveaux de priorité dudit ensemble.

8. Procédé selon l'une des revendications 1 à 7, comprenant l'étape consistant à ajouter une partie d'équilibrage à une partie de charge utile des paquets de données du premier type, une taille de la partie d'équilibrage étant agencée pour donner une taille de paquet de données totale correspondant à une priorité attribuée aux paquets de données du premier type.

9. Procédé selon l'une des revendications 1 à 8, comprenant les étapes consistant à :

recevoir dans le tampon des paquets de données supplémentaires comprenant un ou plusieurs types supplémentaires de paquets de données ; et
attribuer une priorité aux paquets de données supplémentaires conformément à la fonction de priorité.

10. Article comprenant un support de stockage lisible par ordinateur contenant des instructions qui, lorsqu'elles sont exécutées par un processeur, permettent à un système d'exécuter un procédé selon l'une des revendications 1 à 9.

11. Dispositif d'émission (110) d'un système de communication sans fil, comprenant :

un émetteur (134) possédant une mémoire couplée en communication à un processeur (128),

**caractérisé en ce que**

la mémoire stocke une ou plusieurs fonctions de priorité (130) agencées pour traiter les paquets de données (116, 118) reçus dans un flux de données (121, 122) par un tampon (124) du dispositif d'émission, le flux de données comprenant des paquets de données (118) d'un premier type et des paquets de données (116) d'un deuxième type, la fonction de priorité reposant sur une taille de paquet d'un paquet de données, et le processeur étant agencé pour déterminer une taille de paquet pour chaque paquet de données reçu, régler une taille d'au moins un paquet de données du flux de données d'après une taille de paquet de données initiale, un type de paquet de données et une fonction de priorité donnée à appliquer, une taille des paquets de données du premier type étant fixée à une valeur de taille spécifique ou dans une plage de valeurs de taille, et attribuer une priorité à chaque paquet de données reçu selon la taille du paquet et conformément à la fonction de priorité.

12. Dispositif d'émission selon la revendication 11, le tampon (124) étant agencé pour stocker les paquets de données reçus et expédier chaque paquet de données reçu en fonction de la priorité.

13. Dispositif d'émission selon la revendication 11 ou 12, dans lequel le tampon est agencé pour recevoir les paquets de données en fonction du flux, et dans lequel un ou plusieurs flux de données (120, 122) comprennent un paquet de données (116) d'un premier type et un paquet de données (118) d'un deuxième type.

14. Dispositif d'émission selon la revendication 13, le dispositif d'émission étant agencé pour communiquer à un dispositif récepteur (112) des paquets de données desdits un ou plusieurs flux de données et un message indiquant une fonction de mise en relation de la taille de paquet à la priorité, PSTP, à utiliser par le dispositif d'émission pour traiter les paquets de données reçus dans lesdits un ou plusieurs flux de données.

15. Dispositif d'émission selon l'une des revendications 11 à 14, le processeur étant agencé pour :

envoyer les paquets de données (118) ayant une première priorité pour traitement ; et
éliminer les paquets de données (116) ayant une deuxième priorité, inférieure à la première priorité.

*FIG. 1*

# FIG. 2

EP 2 721 774 B1

| $s_i'$ | 1 | 2 | 3 | 4 | 5 | 6 | 7 | 8 | 9 | 10 | ... |
|--------|---|---|---|---|---|---|---|---|---|----|-----|

302  302a  302b  302c

| $p_i$ | 1 | 1 | 1 | 1 | 1 | 1 | 1 | 1 | 0 | 0 | ... |
|-------|---|---|---|---|---|---|---|---|---|---|-----|

304  304a  304b  304c

**FIG. 3**

| $s_i'$ | 1 | 2 | 3 | 4 | 5 | 6 | 7 | 8 | 9 | 10 | ... |
|--------|---|---|---|---|---|---|---|---|---|----|-----|

306a  306b  306c  306d  306e  306f  306

| $p_i$ | 1 | 2 | 3 | 0 | 1 | 2 | 3 | 0 | 0 | 0 | ... |
|-------|---|---|---|---|---|---|---|---|---|---|-----|

308a  308b  308c  308d  308e  308f  308

**FIG. 4**

FIG. 5

FIG. 6

**EP 2 721 774 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6314087 B
- US 20072066 B
- EP 2262306 A